# EUROPEAN PATENT SPECIFICATION

(11) **EP 1 778 005 B1**
(45) Date of publication and mention of the grant of the patent: **27.03.2013**
(21) Application number: 04737906.0
(22) Date of filing: 30.06.2004
(51) Int. Cl.: A01K 61/00

(54) **MUSSEL SOCK**
MUSCHELNETZSCHLÄUCHE
Boudin de mytiliculture

(43) Date of publication of application: 02.05.2007
(73) Proprietor: Go Deep International Inc., Fredericton NB E3B 4Z9 (CA)
(72) Inventor: FERGUSON, Kent, Masonworth, New Brunswick E3C 1M2 (CA)
(74) Representative: Rickard, David John
(86) International application number: PCT/CA2004/000967
(87) International publication number: WO 2006/002504

(56) References cited:
- EP-A- 1 321 371
- FR-A- 993 170
- FR-A- 2 521 065
- FR-A- 2 554 319
- FR-A- 2 583 613
- FR-A- 2 636 206
- US-A- 5 511 514

## Description

### Field of the Invention

The present invention relates to aquaculture and, more specifically concerns but is not limited to methods and devices relating to a sock for use in mussel farming.

### Background to the Invention

The field of aquaculture is growing as more and more people farm sea creatures for sale on the world market. One area of aquaculture that has seen an increase in not only demand but also in the technology used in mussel farming.

Mussel farming involves growing baby mussels (referred to as mussel "seeds") and then placing the mussel seed into a tubular/cylindrical mussel sock that is immersed in water. The mussel sock keeps the mussel seeds together and, as the seeds grow, they push out of the mussel sock and attach themselves to the outside of the sock. Current mussel socks are composed of a mesh of cells through which mussels can push through. Socks also have different sizes based on the cell growing size with smaller seeds needing to be place in smaller sized socks so that the seeds do not fall out of the sock.

One disadvantage that current socks suffer from is that, with fixed cell sizes, some mussels that grow faster than expected are unable to push out of the sock. While one solution would be to place the mussel seed in socks with a larger cell size, this will preclude the placement of smaller mussel seeds in the same sock as the smaller seeds may fall out.

Another disadvantage of current mussel socks is the need for manual labour to tie off the ends of the socks. Currently, socks are sold in rolls with the end user cutting lengths of sock for their use and tying off one end and feeding seeds into the socks at the other end of the cylindrical socks. Clearly, this is time consuming and can lead to lost seeds if the knot tied is not secure. Current high speed socking tables (automatic sock filling machines) would be better served if there was no requirement to manually tie off one of the ends of the sock.

A third disadvantage relates to the manufacturing method for the sock. The two walls of meshes that make up the sock are attached to each other at their longitudinal sides. This attachment can give away as the mussel seeds grow, leading to lost mussels and, thereby, lost revenue for the mussel farmer.

FR-A-2 554 319 (LHONNEUR PIERRE) discloses a mussel sock made from one network of a small mesh size, made of putrescible material, for retaining mussels of a very small size, connected with a second network of a large mesh size to facilitate growth of larger mussels. The small mesh network disappears after about fifteen days in water so that growth of the mussels to larger sizes is not hampered.

It is an object of the present invention to at least mitigate if not overcome the shortcoming of the prior art.

### Summary of the Invention

The present invention provides methods and devices related to an improved mussel sock. The improved mussel sock is a mesh of cells constructed from strands of a first material such as polypropylene. Strands of a second material, with weaker mechanical properties than the first material such as cotton, are woven through the mesh so as to divide each cell into at least two sub cells. Once the mussel sock is full of mussels and after prolonged exposure to water, the second material will degrade and eventually give way to the mussel, thereby providing a mussel sock with a larger cell size. The improved mussel sock also has reinforced sides and are cut to predetermined lengths. One end of the predetermined length mussel socks are reinforcedly sewn shut to provide a ready-to-use sock for the mussel farmer.

More specifically, the invention provides, according to claim 1, a tubular mussel sock for use in cultivating mussels, the mussel sock comprising two elongated walls each wall having two longitudinal sides and two latitudinal ends, said two walls being joined to one another at each longitudinal side, each longitudinal side of one wall being reinforcedly attached to a longitudinal side of the other wall, whereby said one wall and said other wall are reinforcedly attached to one another, each wall being constructed to form a mesh of cells, each cell being formed from strands of a first material, each cell being divided into at least two subcells by strands of a second material interwoven with said first material, said second material being mechanically weaker than said first material, whereby each cell has a size and shape that is substantially fixed for a life of said sock.

In a preferred embodiment, the latitudinal end of one wall is reinforcedly attached to the latitudinal end of the other wall

According to claim 11, there is provided a method of manufacturing a mussel sock for use in aquaculture, the method comprising: providing two walls for use in said sock, each wall being a mesh of cells, each cell being formed from strands of a first material, each wall having two longitudinal sides and two latitudinal ends; weaving at least one strand of a second material through each cell thereby subdividing each cell into at least two subcells, wherein said second material is mechanically weaker than said first material; attaching each longitudinal side of one wall to a corresponding longitudinal side of the other wall to form a tube; reinforcing each attachment of corresponding longitudinal sides whereby said cells will have a size and shape that is substantially fixed for a life of said sock.

In a preferred embodiment the method also comprises measuring a predetermined length of said tube, latitudinally cutting said tube to result in a predetermined length of tube with openings at two latitudinal ends and attaching one latitudinal end of one wall to a corresponding latitudinal end of the other wall.

### Brief Description of the Drawings

A better understanding of the invention will be obtained by considering the detailed description below, with reference to the following drawings in which:
Figure 1 illustrates a portion of an improved mussel sock according to the invention;
Figure 2 illustrates a flattened side view of the sock of Figure 1;
Figure 3 illustrates the sealed latitudinal ends of the sock of Figure 1.

### Detailed Description

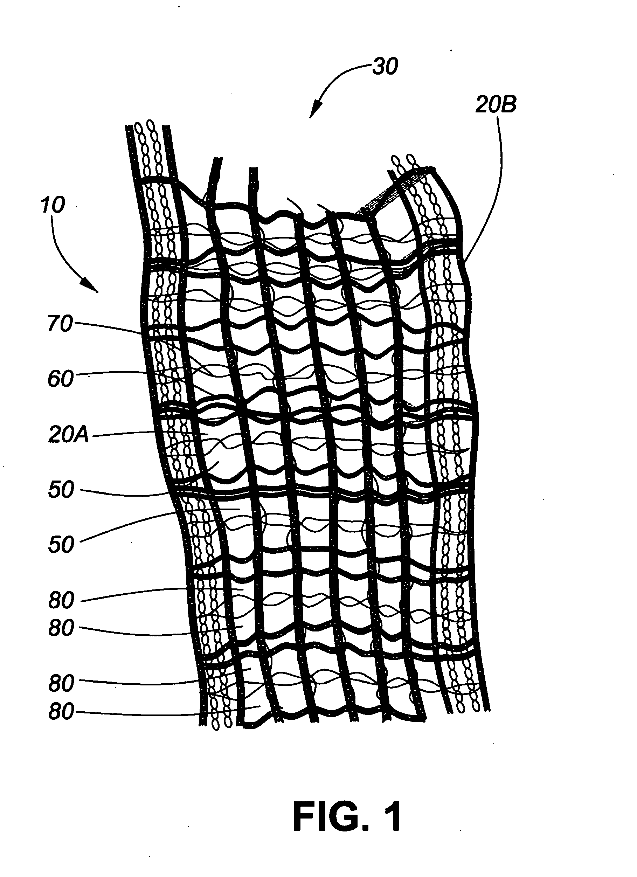

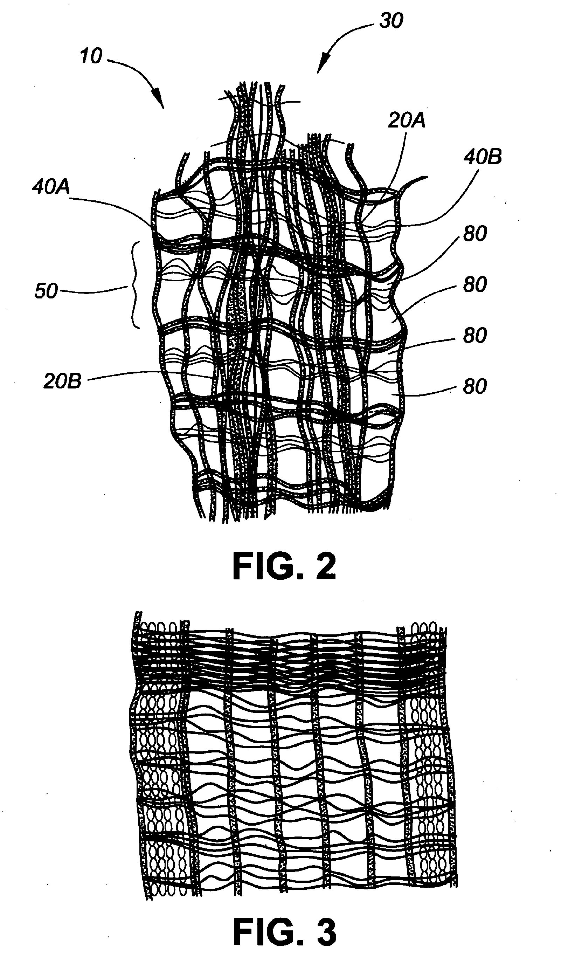

Referring to Figure 1, a portion of an improved mussel sock (10) is illustrated. The mussel sock (10) has two longitudinal sides (20A), (20B) and two latitudinal ends (30) of which only one is illustrated in Figure 1. Two walls (40A), (40B) are seen in Figure 2, a flattened side view of the mussel sock (10). These two walls (40A), (40B), of the sock (10) are each a mesh of cells (50) formed from strands (60) of a first material. Strands (70) of a second material (70) are woven through each cell (50) to divide each cell (50) into subcells (80). As can be seen in Figures 1 and 2, cells may be separated by more than one strand of the first material and subcells may be determined by more than one strand of the second material. The two walls, between them, provide a tubular sock such that mussel seeds may be inserted in the sock in a conventional manner.

As can be seen from the figures, the cells are all of the same shape. In the figures, the cells are approximately of a rectangular shape. Depending on the size of the mussels being grown and the needs of the end user, the cell shape may be different. Square shaped cells may also be use as well as hexagonal shaped cells. However, square or rectangular shaped cells have provided the best results.

The design of the mussel sock allows the cells to stay a fixed shape even after the mussels have migrated to the outside of the sock. Each cell is formed by weaving strands of the first material widthwise (latitudinal direction) across the sock and, at each intersection between the strands of the first material and the lengthwise supporting strands, also constructed of the first material, the two are woven and/or sewn together. This has the effect of preventing the cell shape from overly deforming when laden with mussel seeds and/or mussels. The cell sizes (and cell shape) are therefore fixed and, with a fixed number of cells per sock area, the quantity of mussels per meter of sock is controllably fixed. The increased number of strands of the first material and the lengthwise supporting strands also provides an increased surface area to which the migrating mussels can latch on.

The two materials used to construct the mesh of cells and subcells are to be selected for differing characteristics. The first material should be selected for durability and mechanical strength even after prolonged exposure and immersion in salt or fresh water. It should also be chosen for lightness and, preferably, for an ability to be easily woven or sewn. The reasoning behind these characteristics is that the first material will form the basis for the sock that will hold the mussels together as they grow underwater. Since the sock will be submerged underwater for as long as a year if not two years, mechanical strength to hold the growing mussels is required for the first material. Since most mussel socks are currently constructed using automatic mechanical weaving techniques, it would be advantageous if the first material, as strands, could be easily woven or sewn. Much success has been achieved using the plastic polypropylene as the first material. As an alternative, polyethylene may also be used as the first material.

For the second material, mechanical strength is not as important as for the first material. Since the subcells formed by the second material need only hold in the mussel seeds and not the larger or nearly full grown mussels, the mechanical strength of the second material need not be that high. In fact, less mechanical strength than the first material is advantageous as the strands of second material forming the subcells are meant to break and/or dissolve to provide a larger cell size for the sock. However, the strands of second material should only break and/or dissolve after prolonged exposure of immersion in salt or fresh water. This is because these strands of second material should dissolve only after the mussel seeds have had a chance to attach themselves to the first material of the sock's construction. Typically, the mussel seeds attach to the first material within the first few days after the mussel seed laden sock is placed in the water. Once the strands of second material have fallen away, the now mussels, now attached to the first material of the cells through the mussel's byssal threads, can slip, push, and pull through the resultant larger cell size and thereby migrate itself to the outside of the sock. As with the first material, it is preferred that the second material be easily weavable or sewable with the first material. Experimentation has shown that cotton is suitable for use as the second material. Strands of cotton, in the form of cotton thread has been found to have the necessary characteristics for use in the improved mussel sock.

As an alternative to cotton for the second material, a polyester/cotton blend of material may be used. While such a second material may not dissolve after prolonged exposure to water, due to the presence of the polyester, the polyester/cotton strands of material should be sufficiently weakened by the exposure to water that the mussels can break the strands as they migrate to the outside of the sock.

As a further improvement to the mussel sock, the two walls are reinforcedly attached to one another by reinforcedly attaching their longitudinal (or lengthwise) sides together. The longitudinal sides of the two walls can be attached by being woven or sewn together (as shown in Figure 1) or by any other convenient means. However, to reinforce the attachment between the two longitudinal sides of the walls, sewing or weaving them multiple times has been formed to be advantageous. If polypropylene or some other plastic material (such as polyethylene) is used as the first material, heat sealing or heat attachment by melting the polypropylene strands will also provide the required reinforcement at the sides. From Figure 1, it should be clear that the reinforcement is done to both longitudinal sides of the sock but, if the user desires and not according to the invention, it is also possible to reinforce only one longitudinal side.

To save the mussel farmer time and effort when using the improved mussel sock, the sock may be cut to predetermined lengths and the bottom end or one of the latitudinal ends (widthwise ends) may be sealed. Referring to Figure 3, an illustration of the sealed latitudinal ends is provided. This sealing is accomplished by folding over a portion of the latitudinal ends of the two walls and then sewing or weaving the folded over ends. As with the reinforced longitudinal sides, if polypropylene or some other suitable plastic is employed as the first material heat sealing may also be used to attach the two latitudinal ends. While folding over the ends and sewing them together has been the preferred method of sealing the latitudinal ends, the folding over step is not necessary. Other means of sealing the latitudinal ends are also possible. The predetermined length of the mussel sock may vary and may depend on the specific end user's requirements.

The mussel sock can be assembled using conventional techniques well-known to those skilled in the art. The sock can be woven using conventional weaving and/or sewing machines known to those skilled in the art. It should be noted that the sealing of the bottom of the sock or the attachment of the two latitudinal ends of the sock may be accomplished after the sock is constructed but prior to delivery to the end consumer. The fully constructed sock, without the attached or sealed off latitudinal ends, may be marketed as a continuous roll. End users may then use such a sock in a conventional manner by cutting the desired lengths and tying off the ends as has previously been done.

It should further be noted that the fixed cell size and fixed cell shape of the improved mussel sock generally subsists for the useful life of the sock. The use of the second material that is mechanically weaker than the first material to divide the cells into smaller subcells provides ease of manufacture. Previously, different cell sizes were required for different mussel seed sizes. With the use of the second material to subdivide the cells, the subcells are sized smaller than the mussel seed placed in the sock. This eliminates the need for many socks sized differently for seed size. Once the strands of second material have dissolved or disintegrated, the mussel seeds have had time to attach themselves to the cells and can therefore migrate out of the sock. The advantage of this is that the cell size is fixed to one that will allow all mussel seed sizes to migrate out of the sock. As such, the cell size need not be adjusted during the manufacture of the sock but merely the size of the subcells formed by the strands of the second material as outlined above.

A person understanding the invention may now conceive of alternative structures and embodiments or varieties of the above all of which are intended to fall within the scope of the invention as defined in the claims that follow.

## Claims

1. A tubular mussel sock (10) for use in cultivating mussels, the mussel sock comprising two elongated walls (40A, 40B) each wall having two longitudinal sides (20A, 20B) and two latitudinal ends, each wall being constructed to form a mesh of cells (50), each cell being formed from strands (60) of a first material, each cell being divided into at least two subcells (80) by strands (70) of a second material interwoven with said first material, said second material being mechanically weaker than said first material, **characterised by** each longitudinal side of one wall being reinforcedly attached to a longitudinal side of the other wall, whereby said one wall and said other wall are reinforcedly attached to one another, and whereby each cell has a size and shape that is substantially fixed for a life of said sock.

2. A mussel sock according to claim 1 wherein said first material is polypropylene.

3. A mussel sock according to claim 1 wherein said second material is cotton.

4. A mussel sock according to claim 1 wherein said longitudinal side of one wall is reinforcedly attached to the longitudinal side of the other wall by means of sewing.

5. A mussel sock according to claim 1 wherein said latitudinal end of one wall is reinforcedly attached to the latitudinal end of the other wall.

6. A mussel sock according to claim 1 wherein said second material is mechanically degraded after prolonged immersion in water.

7. A mussel sock according to claim 1 wherein said sock has a predetermined length.

8. A mussel sock according to claim 1 wherein each cell has an approximate shape selected from a group comprising:
- rectangle
- square
- hexagon.

9. A mussel sock according to claim 1 wherein the first material is polyethylene.

10. A mussel sock according to claim 1 wherein the second material is a 20 polyester/cotton blend.

11. A method of manufacturing a mussel sock (10) for use in aquaculture, the method **characterised by**:
a) providing two walls (40A, 40B) for use in said sock, each wall being a mesh of cells (50), each cell being formed from strands (60) of a first material, each wall having two longitudinal sides (20A, 20B) and two latitudinal ends (30);
b) weaving at least one strand (70) of a second material through each cell to thereby subdivide each cell into at least two subcells (80), wherein said second material is mechanically weaker than said first material;
c) attaching each longitudinal side of one wall to a corresponding longitudinal side of the other wall to form a tube; and
d) reinforcing each attachment of corresponding longitudinal sides along each longitudinal side whereby said cells will have a size and shape that is substantially fixed for a life of said sock.

12. A method according to claim 11 further including the steps of:
e) measuring a predetermined length of said tube and latitudinally cutting said tube to result in a predetermined length of tube with openings at two latitudinal ends; and
f) attaching one latitudinal end of one wall to a corresponding latitudinal end of the other wall.

13. A method according to claim 11 wherein each cell has an approximate shape selected from a group comprising:
- rectangle
- square
- hexagon.

14. A method according to claim 11 wherein said longitudinal sides are attached to each other by sewing.

15. A method according to claim 12 wherein step (f) is accomplished by sewing the one latitudinal end to the corresponding latitudinal end.

16. A method according to claim 12 wherein said first material is polypropylene.

17. A method according to claim 12 wherein said second material is cotton.

18. A method according to claim 11 wherein said first material is polyethylene.

19. A method according to claim 11 wherein said second material is a 25 polyester/cotton blend.

## Patentansprüche

1. Eine schlauchförmige Muschelsocke (10) zur Verwendung bei der Zucht von Muscheln, wobei die Muschelsocke zwei längliche Wände (40A, 408) mit jeweils zwei Längsseiten (20A, 208) und zwei Enden aufweist und jede Wand aus einem Zellennetz (50) besteht, in dem jede Zelle aus Strängen eines ersten Materials (60) geformt ist und jede Zelle durch Stränge eines zweiten Materials (70), die mit dem besagten ersten Material verwoben sind, in mindestens zwei Unterzellen (80) unterteilt ist und wobei das besagte zweite Material mechanisch zersetzbarer ist als das erste Material, **dadurch gekennzeichnet, dass** jede Längsseite einer Wand fest mit einer Längsseite der anderen Wand verbunden ist und die eine Wand und die besagte andere Wand daher fest miteinander verbunden sind, wobei jede Zelle eine Größe und Form aufweist, die während der Lebensdauer der besagten Socke im Wesentlichen unverändert bleiben.

2. Eine Muschelsocke nach Anspruch 1, wobei das besagte erste Material Polypropylen ist.

3. Eine Muschelsocke nach Anspruch 1, wobei das besagte zweite Material Baumwolle ist.

4. Eine Muschelsocke nach Anspruch 1, wobei die besagte Längsseite einer Wand mit der Längsseite der anderen Wand durch Zusammennähen fest zusammengefügt ist.

5. Eine Muschelsocke nach Anspruch 1, wobei das besagte Ende einer Wand mit dem Ende der anderen Wand fest zusammengefügt ist.

6. Eine Muschelsocke nach Anspruch 1, wobei sich das besagte zweite Material nach längerem Eintauchen in Wasser mechanisch zersetzt.

7. Eine Muschelsocke nach Anspruch 1, wobei die besagte Socke eine vordefinierte Länge aufweist.

8. Eine Muschelsocke nach Anspruch 1, wobei jede Zelle eine ungefähre Form, ausgewählt aus der Gruppe bestehend aus Rechteck, Quadrat und Sechseck aufweist.

9. Eine Muschelsocke nach Anspruch 1, wobei das besagte erste Material Polyethylen ist.

10. Eine Muschelsocke nach Anspruch 1, wobei das besagte zweite Material eine Baumwoll-Polyester-Mischung ist.

11. Ein Verfahren zur Herstellung einer Muschelsocke (10) zur Verwendung bei der Gewässerbewirtschaftung, wobei das Verfahren aus Folgendem besteht:
a) Bereitstellung zweier Wände (40A, 40B), die die besagte Socke bilden, wobei jede Wand aus einem Zellennetz (50) besteht, jede Zelle aus Strängen eines ersten Materials (60) geformt ist und jede Wand zwei Längsseiten (20A, 20B) und zwei Enden (30) aufweist;
b) Verwebung einer jeden Zelle mit mindestens einem Strang eines zweiten Materials (70) zur Unterteilung jeder Zelle in mindestens zwei Unterzellen (80), wobei das besagte zweite Material mechanisch zersetzbarer ist als das erste Material;
c) Zusammenfügung der Längsseiten einer Wand mit den entsprechenden Längsseiten der anderen Wand zur Bildung einer Schlauchform; und
d) Verstärkung der Nähte der zusammengefügten Längsseiten, so dass jede Zelle eine Größe und Form aufweist, die während der Lebensdauer der besagten Socke im Wesentlichen unverändert bleiben.

12. Ein Verfahren nach Anspruch 11, weiter bestehend aus den Schritten:
e) Abmessung einer vordefinierten Länge der besagten Schlauchform und Durchschneidung der besagten Schlauchform zur Erzeugung einer Schlauchform mit einer Öffnung an jedem Ende; und
f) Anfügung eines Endes einer Wand an das entsprechende Ende der anderen Wand.

13. Ein Verfahren nach Anspruch 11, wobei jede Zelle eine ungefähre Form, ausgewählt aus der Gruppe bestehend aus Rechteck, Quadrat und Sechseck aufweist.

14. Ein Verfahren nach Anspruch 11, wobei die besagten Längsseiten durch Annähen zusammengefügt sind.

15. Ein Verfahren nach Anspruch 12, wobei Schritt (f) durch Annähen eines Endes an das entsprechende andere Ende ausgeführt wird.

16. Ein Verfahren nach Anspruch 12, wobei das besagte erste Material Polypropylen ist.

17. Ein Verfahren nach Anspruch 12, wobei das besagte zweite Material Baumwolle ist.

18. Ein Verfahren nach Anspruch 11, wobei das besagte erste Material Polyethylen ist.

19. Ein Verfahren nach Anspruch 11, wobei das besagte zweite Material eine Baumwoll-Polyester-Mischung ist.

## Revendications

1. Boudin tubulaire (10) à utiliser pour élever des moules, le boudin comprenant deux parois allongées (40A, 40B), chaque paroi ayant deux côtés longitudinaux (20A, 20B) et deux extrémités latitudinales, chaque paroi étant construite de manière à former une maille de cellules (50), chaque cellule étant formée de fils (60) d'un premier matériau, chaque cellule étant divisée en au moins deux sous-cellules (80) par des fils (70) d'un deuxième matériau entrelacé avec ledit premier matériau, ledit deuxième matériau étant moins solide sur le plan mécanique que ledit premier matériau, **caractérisé en ce que** chaque côté longitudinal d'une paroi est fixé de manière renforcée à un côté longitudinal de l'autre paroi, ladite une paroi et ladite autre paroi étant fixées de manière renforcée l'une à l'autre, et chaque cellule ayant des dimensions et une forme essentiellement fixes pour la durée de vie dudit boudin.

2. Boudin selon la revendication 1, dans lequel ledit premier matériau est du polypropylène.

3. Boudin selon la revendication 1, dans lequel ledit deuxième matériau est du coton.

4. Boudin selon la revendication 1, dans lequel ledit côté longitudinal d'une paroi est fixé de manière renforcée au côté longitudinal de l'autre paroi par couture.

5. Boudin selon la revendication 1, dans lequel ladite extrémité latitudinale d'une paroi est fixée de manière renforcée à l'extrémité latitudinale de l'autre paroi.

6. Boudin selon la revendication 1, dans lequel ledit deuxième matériau est dégradé mécaniquement après une immersion prolongée dans l'eau.

7. Boudin selon la revendication 1, dans lequel ledit boudin est d'une longueur prédéterminée.

8. Boudin selon la revendication 1, dans lequel chaque cellule présente une forme approximative sélectionnée parmi un groupe comprenant un :
- rectangle,
- carré,
- hexagone.

9. Boudin selon la revendication 1, dans lequel le premier matériau est du polyéthylène.

10. Boudin selon la revendication 1, dans lequel le deuxième matériau est un mélange polyester/coton.

11. Procédé de fabrication d'un boudin (10) à utiliser en aquaculture, le procédé étant **caractérisé par** les étapes suivantes :
a) mise à disposition de deux parois (40A, 40B) à utiliser dans ledit boudin, chaque paroi étant une maille de cellules (50), chaque cellule étant formée de fils (60) d'un premier matériau, chaque paroi ayant deux côtés longitudinaux (20A, 20B) et deux extrémités latitudinales (30) ;
b) tissage d'au moins un fil (70) d'un deuxième matériau dans chaque cellule, afin de diviser chaque cellule en au moins deux sous-cellules (80), ledit deuxième matériau étant moins solide sur le plan mécanique que ledit premier matériau ;
c) fixation de chaque côté longitudinal d'une paroi à un côté longitudinal correspondant de l'autre paroi, afin de former un boudin ; et
d) renforcement de chaque fixation de côtés longitudinaux correspondants le long de chaque côté longitudinal, lesdites cellules ayant des dimensions et une forme essentiellement fixes pour la durée de vie dudit boudin.

12. Procédé selon la revendication 11, comprenant en outre les étapes suivantes :
e) mesure d'une longueur prédéterminée dudit boudin et découpe latitudinale dudit boudin, afin d'arriver à une longueur prédéterminée de boudin avec des ouvertures aux deux extrémités latitudinales ; et
f) fixation d'une extrémité latitudinale d'une paroi à l'extrémité latitudinale correspondante de l'autre paroi.

13. Procédé selon la revendication 11, dans lequel chaque cellule présente une forme approximative sélectionnée parmi un groupe comprenant un :
- rectangle,
- carré,
- hexagone.

14. Procédé selon la revendication 11, dans lequel lesdits côtés longitudinaux sont fixés l'un à l'autre par couture.

15. Procédé selon la revendication 12, dans lequel l'étape (f) est réalisée en cousant une extrémité latitudinale à l'extrémité latitudinale correspondante.

16. Procédé selon la revendication 12, dans lequel ledit premier matériau est du polypropylène.

17. Procédé selon la revendication 12, dans lequel ledit deuxième matériau est du coton.

18. Procédé selon la revendication 11, dans lequel ledit premier matériau est du polyéthylène.

19. Procédé selon la revendication 11, dans lequel ledit deuxième matériau est un mélange polyester/coton.
